# EUROPEAN PATENT APPLICATION

(11) **EP 2 471 890 A2**
(43) Date of publication of application: **04.07.2012**
(21) Application number: 10804723.4
(22) Date of filing: 28.07.2010
(51) Int. Cl.: C09K 11/86, H01J 17/49, H01L 51/50

(54) **OXYNITRIDE PHOSPHOR POWDER, NITRIDE PHOSPHOR POWDER AND A PRODUCTION METHOD THEREFOR**

(30) Priority: 28.07.2009 KR 20090069115; 28.07.2009 KR 20090069116
(71) Applicant: Sungkyunkwan University Foundation for Corporate Collaboration, Suwon-si, Gyeonggi-do 440-746 (KR); Dae Joo Electronic Materials Co., Ltd., Gyeonggi-do 429-452 (KR)
(72) Inventor: YOON, Dae Ho, Suwon-si Gyeonggi-do 441-726 (KR); JO, Deok Su, Suwon-si Gyeonggi-do 440-330 (KR); MASAKI, Takaki, Suwon-si Gyeonggi-do 440-320 (KR); SONG, Young Hyun, Hwaseong-si Gyeonggi-do 445-726 (KR); LIM, Ii-Ji, Seoul 158-754 (KR); HAN, Sang-Hyuk, Siheung-si Gyeonggi-do 205-504 (KR)
(74) Representative: Hössle Patentanwälte Partnerschaft
(86) International application number: PCT/KR2010/004968
(87) International publication number: WO 2011/014010

(57) **Abstract**

The present invention relates to a production method for oxynitride or nitride phosphor powders which can be used in displays such as vacuum fluorescent displays (VFDs), field emission displays (FEDs) and LED display devices, or in lighting devices such as cold cathode fluorescent lamps (CCFL) and LED lamps, or in light-emitting apparatuses such as back-lights, wherein the production method for phosphor powders comprises the step of subjecting part or all of a metal oxide to nitriding by calcining in an atmosphere containing nitrogen, using a fine carbon substance.

## Description

### [Technical Field]

The present disclosure relates to a producing method for an oxynitride phosphor powder and an oxynitride phosphor powder produced by the producing method, and a producing method for a nitride phosphor powder and a nitride phosphor powder produced by the producing method.

### [Background Art]

A phosphor is used in vacuum fluorescent display (VFD), field emission display (FED), light emitting diode (LED) display device, LED back-light, and so on. In any case of the uses of the phosphor, an excitation energy for exciting of the phosphor is required. The excitation energy is excited by an exciting light having high energy such as a vacuum ultraviolet ray, an ultraviolet ray, an electronic beam, or a blue light so as to generate a visible light. However, in case of exposure of the phosphor to an exciting light having high energy for a long time or due to heat or moisture generated upon using the above-described devices, luminance or a color rendering index of the phosphor is deteriorated. Therefore, a phosphor capable of overcoming the so-called luminescence quenching problem has been demanded.

As one solution to the problems, an oxynitride or nitride phosphor has been used. However, the oxynitride or nitride phosphor has been synthesized by a solid state reaction method, which is performed at a high temperature of 1800°C to 2000°C at a high pressure of 10atm to 100atm. Since a source material starts from a nitride material, high-cost equipment and materials have been used to synthesize the phosphor. Further, there has been a difficulty in obtaining a homogenous phosphor upon the synthesis. In order to advantageously use the oxynitride or nitride phosphor in the above-described devices, a novel phosphor which can be effectively excited for use in each of the devices, and an improvement in an RGB phosphorto realize high color rendering, have been demanded.

In consideration of the conventional problems, reseachers have been interested in a nitriding method, which nitrides a precursor in synthesis of oxynitride and nitride phosphors. The nitriding method uses a metal, an oxide, or the like, instead of a nitride, as a precursor to obtain a nitride material. The nitriding method is divided into the following three representative methods: (1) a nitriding method of a metal by self-propagating high-temperature synthesis (SHS); (2) a nitriding method using a gas containing nitrogen and an oxide; and (3) a nitriding method using a gas containing nitrogen, an oxide, and a carbon. The nitriding methods have the pros and cons in light of their respective nitriding principles. According to the nitriding method (1), a high-purity nitride material can be easily obtained, which there is a difficulty in homogeneously mixing the metaland high costs are required since a high-purity metal source material is used for a precursor. The nitriding method (2) uses an oxide as a precursor and nitrides the oxide in a reactor atmosphere using a gas containing nitrogen such as ammonia gas. Ammonia is discomposed at 800°C to 900°C so that a nitride can be easily obtained. However, since the nitriding method (2) uses gas, nitriding reaction may be proceeded with only on a surface of a particle. Further, the nitriding reaction depends greatly on a particle size of the precursor. According to such results, a degree of nitridation may be different in the surface and the inside of the particle of the precursor. According to the nitriding method (3), a carbon and an oxide are mixed such that the carbon and oxygen of the oxide are reacted with each other during calcining, which results in that during the process of removing oxygen of the oxide in the form of CO, the of oxygen vacancies react with the gas containing nitrogen in the atmosphere so as to obtain an oxynitride and a nitride. In this process, however, unreacted carbons remain even after the reaction because of carbon particles that are not uniformly mixed. The as-obtained nitride material is applied for various uses such as engineering ceramics and optical materials. However, the nitriding method (3) has a problem in that characteristics of the nitride material in application to an optical material (e.g., a phosphor material) may be greatly affected by the remaining carbons.

In order to solve the conventional problems, a precursor having a homogeneous composition with a small particle size is required. Since a conventional method mechanically mixes a precursor of a large size µm size), ununiformity and powders of a large size still cause the above-described problems. Accordingly, the nitriding method (2) uses a nano-sized precursor. The nitriding method (3) uses gas containing carbons (e.g., methane) together with a nano-sized precursor. However, since the nano-sized precursor contains silicate, it can be easily glassified thereby causing particle coarsening and formation of bulk particles.

### [Disclosure of the Invention]

### [Problems to Be Solved by the Invention]

In order to solve the above-described problems, the present disclosure provides a producing method for oxynitride and nitride phosphors, and an oxynitride and a nitride phosphor powder produced by the producing method. According to the producing method, a nano-sized precursor with a homogeneous composition is obtained using a liquid phase precursor (LPP) sintering method, and oxynitride and nitride phosphors are produced through a liquid phase precursor-carbon thermal reduction and nitridation (LPP-CRN) method using an oxide and fine carbon materials derived from various organic polymers such as cellulose. Since the present disclosure is based on a liquid phase method by the liquid phase precursor sintering method, it can produce and use a homogeneous nano-sized precursor (a mixture of oxide and carbons). Since the present disclosure includes a process for nitriding the homogeneous nano-sized precursor through a nitriding method, it can provide a producing method for oxynitride and nitride phosphor powders and phosphor powders produced by the producing method, wherein a size distribution of obtained phosphors is uniform, temperature characteristics or light emitting efficiency is excellent, and productivity and economical efficiency are superior.

However, the problems to be solved by the present disclosure are not limited to the problems that have been described. Other problems that are not mentioned herein can be clearly understood by one of ordinary skill in the art from descriptions provided hereinafter.

### [Means for Solving the Problems]

In order to accomplish the above-described objects, in accordance with one aspect of the present disclosure, there is provided a producing method for an oxynitride phosphor powder, including impregnating an aqueous solution, which contains a silicon (Si) source and a metal source to form an oxynitride phosphor, in an organic polymer material to obtain a first precursor, and calcining the first precursor under a nitrogen-containing atmosphere at 800°C to 1800°C to obtain an oxynitride phosphor powder.

In accordance with another aspect of the present disclosure, there is provided an oxynitride phosphor powder produced by the producing method.

In accordance with another aspect of the present disclosure, there is provided a producing method for a nitride phosphor powder, including impregnating an aqueous solution, which contains a silicon (Si) source and a metal source to form a nitride phosphor, in an organic polymer material to obtain a first precursor, and calcining the first precursor under a nitrogen-containing atmosphere at 800°C to 1800°C to obtain a nitride phosphor powder.

In accordance with another aspect of the present disclosure, there is provided a nitride phosphor powder produced by the producing method.

In accordance with another aspect of the present disclosure, there may be provided a display containing the oxynitride and/or nitride phosphor powders as a phosphor.

In accordance with another aspect of the present disclosure, there is provided a lamp containing the oxynitride and/or nitride phosphor powders as a phosphor.

### [Effect of the Invention]

In accordance with the present disclosure, it is possible to provide a novel producing method for oxynitride and nitride phosphor powders, and oxynitride and nitride phosphor powders produced by the producing method, based on the liquid phase method. The phosphor emits from blue to red lights that can absorb an excitation light in a range of blue or a (near) ultraviolet ray. Also, the phosphor has excellent temperature characteristics or light emitting efficiency at a high temperature.

In accordance with the present disclosure, in producing the phosphor powders, control in a residual amount of carbons is started by an impregnated material (first precursor) obtained from the impregnation of an organic polymer compound powder and/or a calcined material (second precursor) obtained from calcining the impregnated material at a low temperature. In the precursors, remaining fine carbons in a size of a few nm's and an oxide phosphor are homogeneously mixed so that homogeneous nitridation can be accomplished. In case of synthesis of multiple-component phosphor, a phosphor having a desired composition can be homogeneously synthesized using the first precursor obtained from impregnation in an organic polymer compound and the second precursor obtained from calcination. Subsequently the oxynitride and nitride phosphor powders can be obtained from calcination in an atmosphere containing nitrogen.

### [Brief Description of the Drawings]

FIG. 1 shows x 50 SEM images of a spherical cellulose (a: 1.5 µn of particle size; b: 2.5 µm of particle size; and c: 3.5 µm of particle size), which can be used as an organic polymer in an embodiment of the present disclosure.

FIG. 2 shows x 5k FE-SEM images of Ca-α-SiAlON:Eu²⁺ obtained by performing calcining using a 2.5µm of spherical cellulose particle at 1,500°C for 2 hours in an Example of the present disclosure.

FIG. 3 shows x 100k FE-SEM images of a second precursor material for synthesis of CaAlSiN₃:Eu²⁺ in an embodiment of the present disclosure.

FIG. 4 shows an XRD pattern of CaAlSiN₃:Eu²⁺ synthesized by performing calcining in a nitrogen atmosphere with a nitrogen initial flow rate of 1 cm/s at 1,600°C for 5 hours in an Example of the present disclosure.

FIG. 5 shows photoluminescence (PL) spectrums of synthesized CaAlSiN₃:Eu²⁺ in an Example of the present disclosure: (a) an excitation spectrum measured based on 630nm of a light emission wavelength and (b) a light emission spectrum measured based on 450 nm of an excitation wavelength.

FIG. 6 shows XRD pattern of Ca-α-SiAlON:Eu²⁺ synthesized by performing calcining in a nitrogen atmosphere with a nitrogen initial flow rate of 1 cm/s at 1,500°C for 5 hours in an Example of the present disclosure.

FIG. 7 shows photoluminescence (PL) spectra of a synthesized Ca-α-SiAlON:Eu²⁺ powder in an Example of the present disclosure: PL (Photoluminescence) graphs of (a) an excitation spectrum measured based on 582nm of a light emission wavelength and (b) a light emission spectrum measured based on 400 nm of an excitation wavelength.

FIG. 8 shows XRD pattern of β-SiAlON:Eu²⁺ synthesized by performing calcining in a nitrogen atmosphere with a nitrogen initial flow rate of 1cm/s at 1600°C for 5 hours in an Example of the present disclosure.

FIG. 9 shows XRD pattern of a α-Si₃N₄ powder synthesized by performing calcining at (a) 1,400°C, (b) 1,450°C, (c) 1,500°C, and (d) 1,500°C of an atmosphere of a nitrogen initial flow rate of 1 cm/s to nitride of SiO₂ through an LPP-CRN method in an Example of the present disclosure.

FIG. 10 shows XRD pattern of a powder obtained by nitriding of Al₂O₃ at (a) 1,400°C and (c) 1,500°C through the LPP-CRN method in an Example of the present disclosure.

FIG. 11 shows an XRD pattern of (Ba_{0.95}Eu₀.₀₅)₃Si₆O₁₂N₂ synthesized in a nitrogen atmosphere with a nitrogen initial flow rate of 1cm/s at 1,300°C for 5 hours in an Example of the present disclosure.

FIG. 12 shows PL (Photoluminescence) spectra of a synthesized (Ba_{0.95}Eu_{0.05})₃Si₆O₁₂N₂ powder in an Example of the present disclosure: (a) an excitation spectrum measured based on 525nm of a light emission wavelength and (b) a light emission spectrum measured based on 450 nm of an excitation wavelength.

FIG. 13 shows an XRD pattern of a powder obtained by calcining and nitriding a SiO₂ powder of Wuartzs at (a) 1,400°C and (b) 1,500°C through a conventional CRN method as a Comparative Example.

### [Best Mode for Carrying out the Invention]

Hereinafter, illustrative embodiments and working examples will be described in detail with reference to the accompanying drawings so that inventive concept may be readily implemented by those skilled in the art.

However, it is to be noted that the present disclosure is not limited to the illustrative embodiments and working examples but can be realized in various other ways. In the drawings, certain parts not directly relevant to the description are omitted to enhance the clarity of the drawings, and like reference numerals denote like parts throughout the whole document.

Throughout the whole document, the term "comprises or includes" and/or "comprising or including" used in the document means that one or more other components, steps, operations, and/or the existence or addition of elements are not excluded in addition to the described components, steps, operations and/or elements.

In accordance with one aspect of the present disclosure, there is provided a producing method for an oxynitride phosphor powder, the producing method including impregnating an aqueous solution, which contains a silicon (Si) source and a metal source to form an oxynitride phosphor, in an organic polymer material to obtain a first precursor, and calcining the first precursor under a nitrogen-containing atmosphere at 800°C to 1,800°C to obtain an oxynitride phosphor powder.

In an illustrative embodiment, the producing method for an oxynitride phosphor powder may further include pre-calcining the first precursor under an oxygen-containing atmosphere at 150°C to 550°C to obtain a second precursor, prior to calcining the first precursor, but the present disclosure is not limited thereto.

In an illustrative embodiment, calcining under the nitrogen-containing atmosphere may be performed after cooling following the pre-calcining or sequentially after the pre-calcining, but the present disclosure is not limited thereto.

In an illustrative embodiment, the organic polymer material may be converted into a carbon material during the calcining process to act as a reducing agent, but the present disclosure is not limited thereto.

In an illustrative embodiment, the silicon (Si) source may include a silica sol or an water-soluble silica, but the present disclosure is not limited thereto.

In an illustrative embodiment, a particle size of the silica sol may be 5 nm to 50 nm, but the present disclosure is not limited thereto.

In an illustrative embodiment, the metal source to form the oxynitride phosphor includes a metal source to form an oxynitride phosphor powder presented by a following general formula 1:

[General Formula 1] (M1₂ₐM2₁₋ₐ)_{w}(M3_{b}M4_{1-b})ₓ(M4_{c}Si_{1-c})_{y}M4_{d}(O₁₋ₑN_{2e/3})_{z}:R_{f},

wherein

M1 includes a monovalent alkali metal selected from the group consisting of lithium (Li), sodium (Na), potassium (K), and combinations thereof,

M2 includes a divalent alkaline earth metal selected from the group consisting of magnesium (Mg), calcium (Ca), strontium (Sr), barium (Ba), zinc (Zn), and combinations thereof,

M3 includes a trivalent metal selected from the group consisting of boron (B), aluminum (Al), yttrium (Y), gadolinium (Gd), terbium (Tb), cerium (Ce), and combinations thereof,

M4 acts as a host lattice or a co-activator of the phosphor and includes a trivalent, tetravalent, or pentavalent metal selected from the group consisting of phosphorus (P), vanadium (V), titanium (Ti), arsenic (As), and combinations thereof,

R is an activator and includes a metal selected from the group consisting of europium (Eu), manganese (Mn), cerium (Ce), dysprosium (Dy), samarium (Sm), and combinations thereof,

a is 0 to 1, w is above 0 to 4,

b is 0 to 1, x is 0 to 5,

c is 0 to below 1, y is above 0 to 6,

d is 0 to 3,

e is 0.7 to 1

z is above 2 to 54, and

f is 0.001(w+x+y+d) to 0.3(w+x+y+d).

In an illustrative embodiment, the producing method may further include calcining under a nitrogen-containing atmosphere and a pressurization atmosphere of 1 atm to 100 atm at 800°C to 1,900°C. However, the present disclosure is not limited thereto.

In an illustrative embodiment, the organic polymer material may include a pulp, a crystallized cellulose powder, a non-crystalline cellulose powder, a rayon powder, a spherical cellulose powder, or a cellulose solution, but the present disclosure is not limited thereto.

In an illustrative embodiment, the nitrogen-containing atmosphere may include N₂, H₂/N₂ mixture gas, or NH₃ gas, but the present disclosure is not limited thereto.

In an illustrative embodiment, the nitrogen-containing atmosphere may further include CO or CH₄ gas, but the present disclosure is not limited thereto.

In an illustrative embodiment, the metal source may include a flux source, but the present disclosure is not limited thereto.

In an illustrative embodiment, the flux source may include NH₂(CO)NH₂ (urea), NH₄NO₃, NH₄Cl, NH₂CONH₂, NH₄HCO₃, H₃BO₃, BaCl₂, or EuCl₃, but the present disclosure is not limited thereto.

In an illustrative embodiment, the producing method may further include subjecting the obtained oxynitride phosphor powder to acid or alkali treatment, but the present disclosure is not limited thereto.

In accordance with another aspect of the present disclosure, there is provided an oxynitride phosphor powder presented by the following general formula 1 and produced by the above-described producing method.

[General Formula 1] (M1₂ₐM2₁₋ₐ)(M3_{b}M4_{1-b})ₓ(M4_{c}Si_{1-c})_{y}M4_{d}(O₁₋ₑN_{2e/3})_{z}:R_{f}.

wherein

M1 includes a monovalent alkali metal selected from the group consisting of lithium (Li), sodium (Na), potassium (K), and combinations thereof,

M2 includes a divalent alkaline earth metal selected from the group consisting of magnesium (Mg), calcium (Ca), strontium (Sr), barium (Ba), zinc (Zn), and combinations thereof,

M3 includes a trivalent metal selected from the group consisting of boron (B), aluminum (Al), yttrium (Y), gadolinium (Gd), terbium (Tb), cerium (Ce), and combinations thereof,

M4 acts as a host lattice or a co-activator of a phosphor and includes a trivalent, tetravalent, or pentavalent metal selected from the group consisting of phosphorus (P), vanadium (V), titanium (Ti), arsenic (As), and combinations thereof,

R includes an activator and includes a metal selected from the group consisting of europium (Eu), manganese (Mn), cerium (Ce), dysprosium (Dy), samarium (Sm), and combinations thereof,

a is 0 to 1, w is above 0 to 4,

b is 0 to 1, x is 0 to 5,

c is 0 to below 1, y is above 0 to 6,

d is 0 to 3,

e is 0.7 to 1

z is above 2 to 54, and

f is 0.001(w+x+y+d) to 0.3(w+x+y+d).

In an illustrative embodiment, a particle diameter of the oxynitride phosphor powder may be 15µm or less, but the present disclosure is not limited thereto.

In an illustrative embodiment, the oxynitride phosphor powder includes M-α-SiAlON:M_{Re}, β-SiAlON : M_{Re}, MSi₂O₂N₂:M_{Re}, EuSi₂O₂N₂, or BCNO. Here, M may include at least one selected from the group consisting of Ca, Sr, and Ba. M_{Re} may include at least one selected from the group consisting of Eu, Ce, Mn, and Tb. However, the present disclosure is not limited thereto.

In accordance with another aspect of the present disclosure, there is provided a producing method for a nitride phosphor powder, the producing method including impregnating an aqueous solution, which contains a silicon (Si) source and a metal source to form a nitride phosphor, in an organic polymer material to obtain a first precursor, and calcining the first precursor under a nitrogen-containing atmosphere at 800°C to 1,800°C to obtain a nitride phosphor powder.

In an illustrative embodiment, the producing method for a nitride phosphor powder may further include pre-calcining the first precursor under an oxygen-containing atmosphere at 150°C to 550°C to obtain a second precursor, prior to calcining the first precursor. However, the present disclosure is not limited thereto.

In an illustrative embodiment, calcining in the nitrogen-containing atmosphere may be performed after cooling following the pre-calcining or sequentially after the pre-calcining. However, the present disclosure is not limited thereto.

In an illustrative embodiment, the organic polymer material may be converted into a carbon material during the calcining process to act as a reducing agent. However, the present disclosure is not limited thereto.

In an illustrative embodiment, the silicon (Si) source may include a silica sol or an water-soluble silica, but the present disclosure is not limited thereto.

In an illustrative embodiment, a particle size of the silica sol may be 5 nm to 50 nm, but the present disclosure is not limited thereto.

In an illustrative embodiment, the metal source to form a nitride phosphor includes a metal source to form a nitride phosphor powder presented by a following general formula 2:

[General Formula 2] (M1₂ₐM2₁₋ₐ)_{w}(M3_{b})ₓAl_{y}(M4_{c}SiₑN_{4e/3})_{z}:R_{f},

wherein

M1 includes a monovalent alkali metal selected from the group consisting of lithium (Li), sodium (Na), potassium (K), and combinations thereof,

M2 includes a divalent alkaline earth metal selected from the group consisting of magnesium (Mg), calcium (Ca), strontium (Sr), barium (Ba), zinc (Zn), and combinations thereof,

M3 includes a trivalent metal selected from the group consisting of boron (B), yttrium (Y), gadolinium (Gd), terbium (Tb), cerium (Ce), and combinations thereof,

M4 acts as a host latticel or a co-activator of a phosphor and includes a trivalent, tetravalent, or pentavalent metal selected from the group consisting of phosphorus (P), vanadium (V), titanium (Ti), arsenic (As), and combinations thereof,

R is an activator and includes a metal selected from the group consisting of europium (Eu), manganese (Mn), cerium (Ce), dysprosium (Dy), samarium (Sm), and combinations thereof,

a is 0 to 1, w is above 0 to 4,

b is 0 to 1, x is 0 to 5,

c is 0 to below 1, y is above 0 to 6,

d is 0 to 3,

e is 0.7 to 1

z is above 1 to 27, and

f is 0.001(w+x+y+d) to 0.3(w+x+y+d).

In an illustrative embodiment, the producing method may further include calcining under a nitrogen-containing atmosphere and a pressurization atmosphere of 1 atm to 100 atm at 800°C to 1,900°C, but the present disclosure is not limited thereto.

In an illustrative embodiment, the organic polymer material may include a pulp, a crystallized cellulose powder, a non-crystalline cellulose powder, a rayon powder, a spherical cellulose powder or a cellulose solution, but the present disclosure is not limited thereto.

In an illustrative embodiment, the nitrogen-containing atmosphere may include mixture N₂, H₂/N₂ mixture gas, or NH₃ gas, but the present disclosure is not limited thereto.

In an illustrative embodiment, the nitrogen-containing atmosphere may further include CO or CH₄ gas, but the present disclosure is not limited thereto.

In an illustrative embodiment, the metal source may include a flux source, but the present disclosure is not limited thereto.

In an illustrative embodiment, the flux source may include NH₂(CO)NH₂(urea), NH₄NO₃, NH₄Cl, NH₂CONH₂, NH₄HCO₃, H₃BO₃, BaCl₂, or EuCl₃, but the present disclosure is not limited thereto.

In an illustrative embodiment, the producing method may further include subjecting the obtained nitride phosphor powder to acid or alkali treatment, but the present disclosure is not limited thereto.

In accordance with another aspect of the present disclosure, there is provided a nitride phosphor powder presented by the following general formula 2 and produced by the above-described producing method.

[General Formula 2] (M1₂ₐM2₁₋ₐ)_{w}(M3_{b})ₓAl_{y}(M4_{c}SiₑN_{4e/3})_{z}:R_{f,}

wherein

M1 includes a monovalent alkali metal selected from the group consisting of lithium (Li), sodium (Na), potassium (K), and combinations thereof,

M2 includes a divalent alkaline earth metal selected from the group consisting of magnesium (Mg), calcium (Ca), strontium (Sr), barium (Ba), zinc (Zn), and combinations thereof,

M3 includes a trivalent metal selected from the group consisting of boron (B), yttrium (Y), gadolinium (Gd), terbium (Tb), cerium (Ce), and combinations thereof,

M4 acts as a host lattice or a co-activator of a phosphor and includes a trivalent, tetravalent, or pentavalent metal selected from the group consisting of phosphorus (P), vanadium (V), titanium (Ti), arsenic (As), and combinations thereof,

R is an activator and includes a metal selected from the group consisting of europium (Eu), manganese (Mn), cerium (Ce), dysprosium (Dy), samarium (Sm), and combinations thereof,

a is 0 to 1, w is above 0 to 4,

b is 0 to 1, x is 0 to 5,

c is 0 to below 1, y is above 0 to 6,

d is 0 to 3,

e is 0.7 to 1

z is above 1 to 27, and

f is 0.001 (w+x+y+d) to 0.3(w+x+y+d).

In an illustrative embodiment, a particle diameter of the nitride phosphor powder may be 15 µm or less, but the present disclosure is not limited thereto.

In an illustrative embodiment, the nitride phosphor powder includes MAlSN:M_{Re}, M₂Si₅N₈:M_{Re}, MYSi₄N₇:M_{Re}, La₃Si₆N₁₁:M_{Re}, YTbSi₄N₆C, or Y2Si₄N₆C:M_{Re}. Here, M may be at least one selected from the group consisting of Ca, Sr, and Ba. M_{Re} may be at least one selected from the group consisting of Eu, Ce, Mn, and Tb. However, the present disclosure is not limited thereto.

The oxynitride and nitride phosphor powders in accordance with the present disclosure may be used for manufacture of various devices and lightings such as displays and lamps.

Non-limited examples of the displays include a cathode-ray tube, a light emitting diode (LED), a plasma display panel (PDP), a field emission display (FED), a vacuum fluorescence display (VFD), and others.

Hereinafter, embodiments of the producing method for an oxynitride phosphor powder and the producing method for a nitride phosphor powder will be described in more detail.

In an illustrative embodiment of the present disclosure, the producing method for an oxynitride or nitride phosphor powder may include impregnating an aqueous solution containing a water-soluble silica sol, as a sillicon source and a metal source to form an oxynitride or nitride phosphor powder, in an organic polymer compound to obtain an impregnation material (first precursor), and calcining the first precursor under a nitrogen-containing gas atmosphere under the condition that the gas flows with a constant initial flow rate at 800°C to 1,800°C, or pre-calcining the first precursor under an oxygen-containing atmosphere at 150°C to 550°C to obtain a second precursor, and calcining the second precursor in a nitrogen-containing gas atmosphere under the condition that the gas flows with a constant initial flow rate at 800°C to 1,800°C sequentially after the pre-calcining or after cooling following the pre-calcining.

The organic polymer compound may be converted into a carbon during the calcining process and acts as a reducing agent. Since the carbon is in a fine particle form, it may act as a template in producing oxynitride and nitride phosphor powders. For example, once there is given a general formula for oxynitride and nitride phosphor powders desired to be produced, an amount of the organic polymer compound with respect to the number of atoms of metal elements contained in the general formula is stoichiometrically or quantitatively calculated in an atomic ratio. Accordingly, when producing each of the oxynitride and nitride phosphor powders, the nitriding condition can be adjusted.

In case of producing and using aqueous solutions for each of the silica sol and the metal source, both of the solutions are preferably acidic or alkaline. If the solutions having different pHs are used, precipitation occurs thereby causing difficulties in impregnation and uniform mixing.

In using the organic polymer compound, purity of the organic polymer compound is preferably at least 98%. For the organic polymer compound, a cellulose, for example, a high-purity cellulose powder may be used, but not limited thereto. An impregnation ratio of the cellulose powder and the aqueous solution containing the metal source and the silicon source is preferably 1:1 wt% to 0.2:1 wt%, nut not limited thereto. If a high-purity cellulose is used, impurities can be reduced. In the impregnation ratio of the cellulose and the solution, if the proportion of the cellulose is at least 1, a residual amount of carbons derived from the cellulose increases so that the carbons act as impurities. If the proportion of the cellulose is below 0.2, an amount of carbons for nitridation is insufficient. Furthermore, upon the pre-calcining, the oxygen-containing atmosphere may be an air, but not limited thereto.

The pre-calcining to obtain a second precursor of the impregnation material obtained by impregnating in the organic polymer may be performed at, for example, 150°C to 550°C, or 250°C to 350°C, but not limited thereto. Calcination time for a residual amount of carbons may be controlled to from 30 minutes to 5 hours in order to control carbons derived from the organic polymer. The calcining time may vary depending on a heating temperature and an amount of a produced phosphor. If the calcining time is below 30 minutes, a large amount of carbons derived from the organic polymer compound remain so that the fluorescence characteristic of the produced phosphor is deteriorated. If the calcining time is above 5 hours, most of the remaining carbons are oxidized so that it would be difficult to synthesize oxynitride and nitride phosphors. Accordingly, the calcining time is preferably set to from 1 to 2 hours so that the organic polymer compound is converted into an desired amount of residual carbons.

If the temperature for calcining in the nitrogen-containing gas atmosphere in which the gas flows with a constant initial flow rate is below 800°C, the nitrogen-containing atmosphere cannot easily exceed an activation energy for reacting with the precursor material so that the reaction is slow. Since nitriding reaction is almost finished at a temperature of above 1,800°C, the temperature is not effective for an oxynitride or nitride material having a low degree of diffusion. A preferable calcining temperature is 1,200°C to 1,700°C. A calcining time to produce the oxynitride and nitride phosphor powders may be set to 2 hours to 38 hours. The calcining time is set in consideration of diffusion in a nitride material. In case of the calcining time of below 2 hours, diffusion is not substantially performed. A phosphor that has not been diffused for at least 38 hours is not effective. A preferable calcining time is 5 hours to 12 hours.

The calcining process is carried out at a temperature increasing rate of 1°C/min to 30°C/min. If the temperature increasing rate is below 1°C/min, the calcining time is prolonged so that nitriding reaction and oxidization reaction are slow. If the temperature increasing rate is higher than 30°C/min, it may cause breakdown of used equipments, and reproducibility in the calcining process is declined so that it is difficult to obtain a uniform phosphor powder. In addition, it is possible to construct an atmosphere in which a sample is loaded in a short time into a furnace pre-heated to a temperature for synthesis so that carbon thermal decomposition reaction occurs simultaneously with nitridation reaction through a sintering method by rapid firing (RF). This solves a problem in synthesizing high-efficiency oxynitride and nitride phosphors resulting from a difference in a reaction temperature between the carbon thermal decomposition reaction and the reaction of the nitrogen-containing gas in which the gas flows with a constant initial flow rate.

In an illustrative embodiment of the present disclosure, in carbonization of cellulose that can be used as an example of the organic polymer compound, firstly OH of first and sixth carbons of polymer cellulose through thermal decomposition is bonded in an atmosphere not containing oxygen. Accordingly, bond of the polymer is disconnected, and the cellulose is easily converted into levoglucosan (C₆H₁₀O₅). OH of a first carbon and OH of a fourth carbon of levoglucosan are bonded to each other so that levoglucosan is transformed into a structural isomer of 3,6-anhydro-D-glucose (C₆H₁₀O₅). Next, OH of a sixth carbon and OH of a first carbon of 3,6-anhydro-D-glucose (C₆H₁₀O₅) are bonded to each other so that 3,6-anhydro-D-glucose (C₆H₁₀O₅) is converted into levoglucosan again. Levoglucosan and 3,6-anhydro-D-glucose are generated in an initial stage at a low temperature of thermal treatment. Each of levoglucosan and 3,6-anhydro-D-glucose contains of three -OH groups and two C-O's groups. Levoglucosan and 3,6-anhydro-D-glucose are transformed into polymer compounds with various bonding according to a higher temperature. For example, a third carbon is bonded to one of the three -OH groups so that 1,4:3,6-dianhydro-D-glucose (C₆H₈O₄) and a structural isomer thereof are formed. Their common point is that H₂O is removed per molecule around 600°C. If calcining is performed at a higher temperature, hydrogen of -OH is removed. Due to a strong bond of C-O, a conjugate is formed and maintained. Thereafter, the conjugate disappears in the form of CO(g) at a temperature of 800°C to 900°C or higher so that two carbons remain. Accordingly, an amount of the carbons can be quantitatively calculated.

Through chemical reactions as in the above cellulose, a quantitative calculation of an amount of carbons required to produce each of the oxynitride and nitride phosphor powders can be performed from the first precursor and the second precursor. The producing method for each of the oxynitride and nitride phosphors by using the first precursor preferably uses cellulose in an amount of carbons for nitriding based on an self-oxidizable material like a following reaction equation A:

A. Reaction Equation

2M(NO₃)₃+3C(polymer compound) +2N₂ M₂O₃+6NO₂↑3/20₂↑+2N₂→ M₃N₄+3CO_{↑}

The nitriding method using the first precursor can be represented with a starting material (except for N₂) in the reaction equation A and can easily adjust an amount of carbons from the organic polymer compound according to a reaction ratio. In the process, a flux can be used together with a metal source aqueous solution. In this way, each of the oxynitride and nitride phosphor powders can be synthesized.

Adjustment of an amount of carbons using the second precursor can be subject to nitriding like a following reaction equation B:

Reaction Equation B:

3MCl₄+3(C₆H₁₀O₅)+xO₂ (in the air) → 3MO₂+6C+2N₂+15H₂O↑+12CO₂↑→M₃N₄+6CO↑

In the reaction equation B, an amount of carbons can be adjusted according to a calcining temperature. Thus, it is difficult to calculate an amount of carbons. However, volume of the precursor can be reduced, and thus productivity increases, and storing the second precursor is easy. Further treatment in an intermediate step such as flux treatment is possible.

From the reaction equations A and B, carbons can be quantitatively adjusted. Accordingly, remaining carbons are reacted with oxygen in an oxide so and thus removed in the form of CO (g) at 800°C to 900°C. Thus, the reaction equations can be applied to production of oxynitride and nitride phosphor powders.

In this case, a degree of impregnation is varied according to a concentration of a solution. A concentration of the mixed metal source aqueous solution can be 10 wt% to 70 wt%, and preferably, 25 wt% to 50 wt%. If the concentration is below 10wt%, time for impregnation in the whole polymer compound is prolanged, and productivity is reduced. If the solution in a low concentration is used, as a use amount of the solution increases, as compared to an organic polymer compound used as a template of the first precursor, so that an amount of the organic polymer compound for impregnation becomes insufficient. The second precursor obtained through pre-calcining of the first precursor affects a residual amount of carbons because a proportion of the solution and an impregnation amount are determined in the process for making the first precursor. If a concentration of the solution is higher than 70 wt%, fluidity of the metal source aqueous solution is reduced thereby causing problems in the impregnation process. Further it is difficult that a large amount of non-impregnated metal source aqueous solution is absorbed from the surface of the organic polymer compound into the inside of the organic polymer compound. Accordingly, the concentration of the mixed metal source aqueous solution is preferably in a range of 25 wt% to 50 wt% so that fine particles are homogeneously impregnated into a matrix of the organic polymer compound.

For the flux, NH₂(CO)NH₂(urea), NH₄NO₃, NH₄Cl, NH₂CONH₂, NH₄HCO₃, H₃BO₃, BaCl₂, or EuCl₃ may be used. Preferably, NH₂(CO)NH₂ (urea) can be used as the flux. Using the flux enables the nitriding reaction to be performed at a lower temperature so that each of high-purity oxynitride and nitride phosphors can be obtained. A used amount of the flux can be 1 wt% to 50 wt%. If the used amount of the flux is below 1wt%, the effect of the flux cannot be achieved. If the use amount of the flux is more than 50 wt%, particle coarsening and melting phenomena may occur due to the excessive use of the flux. Preferably, the used amount of the flux can be 10 wt% to 30 wt%.

For example, if a particle size of the silica sol that can be used as a silica source is less than 5 nm, glassification may be rapidly proceeded at a high temperature, and is not economical. The silica sol having the particle size of at least 50 nm cannot be easily used. Accordingly, the silica sol having a particle size of 10 nm to 20 nm can be used. With respect to a source material for the silica, a water-soluble silica (WSS) may be used. The water soluble silica can be obtained through a substitution reaction of an organic compound having an OH group in an ethyl group of tetraethylorthosilica (TOES) from a chemical reaction of TOES, a material having an OH group (e.g., propylene glycol (PG)), HCl, and so on.

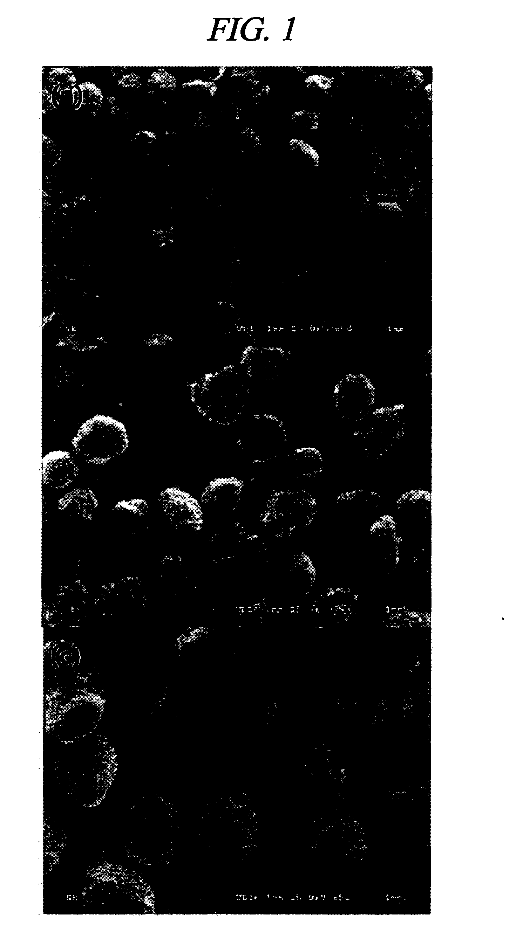

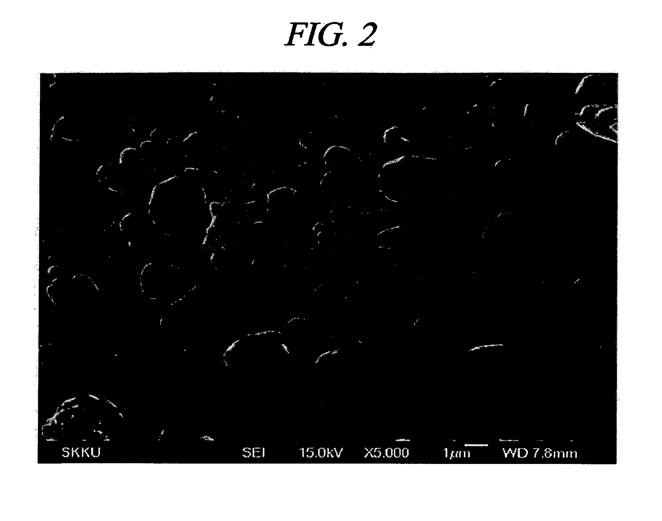

Non-limited examples of the metal source may include metal chloride, metal nitrate, metal sulphate, metal phosphate, metal phosphorus compound, and an organometallic compound. For example, metal chloride, metal nitrate, or an organometallic compound can be used to facilitate synthesis at a low temperature. For example, metal nitrate and an organometallic compound containing an amine group compound (-NH₂) as a compound containing nitrogen and can be preferably used for synthesis of oxynitride and nitride phosphors. As the organometallic compound, metal acetate may be used and can react with the water soluble silica (WSS). Further, the metal acetate interacts with an OH group of a compound such as the cellulose. The organic polymer compound may be a crystalline cellulose (99.99% purity), a spherical cellulose powder, a liquid cellulose solution, a high purity pulp (99.8%), or rayon. Preferably, the organic polymer compound may be a high purity pulp. The metal source aqueous solution can be absorbed into fine crystals (40 Am to 250 Am) of the high purity pulp, the high purity pulp is completely oxidized in a calcining process at at least about 600°C and thus disappears in the air so that little impurities remain. Such celluloses react with an organic acid and/or inorganic acid thereby synthesizing an acetate-based cellulose such as cellulose acetate. It is also possible to make cellulose such as nitrocellulose having a good reactivity. It is possible to synthesize alkyl-based cellulose, hydroxyalkyl-based cellulose, and carboxyalkyl-based cellulose by using halogenoalkanes, epoxides, halogenated carboxylic acids, and others with an inorganic acid. Accordingly, it is possible to adjust a size of pore of a basic cellulose and thus to control an impregnation condition and a particle size. The celluloses react with the water-soluble silica to form an inorganic cellulose such as cellulose silicate. Accordingly, the celluloses can be useful for synthesis of oxynitride and nitride phosphors and for synthesis of a silicate phosphor. Since a crystalline cellulose powder is in a powder form, it may absorb much more solution in impregnation process. For example, in FIG. 1 (a, b, c), spherical cellulose powders having different sizes can control particle shape of the phosphor according to shapes and sizes of the cellulose. FE-SEM images of Ca-α-SiAlON, which is an oxynitride phosphor obtained in the above-described manner through calcining at 1500°C, are shown in FIG. 2.

Calcining in the atmosphere of gas containing nitrogen in which the gas flows with a constant initial flow rate may be performed at H₂/N₂=(1 to 50)/(50 to 99) or NH₃/N₂=(1 to 50) / (50 to 99). For more easiness, the calcination may be performed in an atmosphere containing CH₄, and CO. However, the present disclosure is not limited thereto. For example, as the reduction atmosphere gas, N₂/H₂ (95/5) mixture gas may be used.

In an illustrative embodiment of the present disclosure, high-purity oxynitride and nitride phosphor powders can be obtained through additional calcining under a nitrogen-containing atmosphere and a pressurization atmosphere. For example, in the producing method for oxynitride and nitride phosphor powders, the metal source and silicon source aqueous solution is impregnated in an organic polymer compound, and as described above, after obtaining the first precursor and the second precursor or subsequently after the impregnation, calcining for nitridation is performed in the atmosphere of gas containing nitrogen in which the gas flows with a constant initial flow rate at 800°C to 1,800°C. Thereafter, in order to accomplish a high purity of the obtained phosphors, the obtained phosphors are calcined by using a pressurized high temperature device (e.g., gas pressure sintering (GPS)) in an atmosphere containing nitrogen under a pressure of 1 atm to 100 atm at 1,200°C to 1,900°C so that high-purity oxynitride and nitride phosphor powders are obtained. The pressure of below 1 atm makes pressurization meaningless. The pressure of above 100 atm requires expensive equipments and thus is an extreme and non-effective pressure. A preferable pressure is 5 atm to 20 atm. The temperature of below 1,200°C is too low for diffusion reaction of nitride. The temperature of above 1,900°C is unnecessary for diffusion of nitride. A preferable temperature is 1,600°C to 1,800°C. However, the present disclosure is not limited thereto.

If necessary, in an illustrative embodiment, high-purity oxynitride and nitride phosphor powders can be obtained in an atmosphere containing oxygen at 500°C to 800°C through calcination for removal of remaining carbons and impurities. The temperature of below 500°C is insufficient for oxidization reaction of carbons. In case of the temperature of above 800°C, synthesized oxynitride and nitride phosphor powders may be in a reducted state, and the host lattice may be oxidized, which results in fluorescence deterioration. A preferable calcination temperature is 600°C to 700°C.

A particle size of each of the oxynitride and nitride phosphor powders produced in the present disclosure may be 15 µm or less, for example, 0.5 µm to 15 µm. However, the present disclosure is not limited thereto.

In an illustrative embodiment, the oxynitride phosphor may be represented by the following general formula 1. The nitride phosphor may be represented by the following general formal 2. However, the present disclosure is not limited thereto.

[General Formula 1] (M1₂ₐM2₁₋ₐ)_{w}(M3_{b}M4_{1-b})ₓ(M4_{c}Si_{1-c})_{y}M4_{d}(O₁₋ₑN_{2e/s})_{z}:R_{f},

wherein

M1 includes a monovalent alkali metal selected from the group consisting of lithium (Li), sodium (Na), potassium (K), and combinations thereof,

M2 includes a divalent alkaline earth metal selected from the group consisting of magnesium (Mg), calcium (Ca), strontium (Sr), barium (Ba), zinc (Zn), and combinations thereof,

M3 includes a trivalent metal selected from the group consisting of boron (B), aluminum (A1), yttrium (Y), gadolinium (Gd), terbium (Tb), cerium (Ce), and combinations thereof,

M4 acts as a host lattice or a co-activator of the phosphor and includes a trivalent, tetravalent, or pentavalent metal selected from the group consisting of phosphorus (P), vanadium (V), titanium (Ti), arsenic (As), and combinations thereof,

R is an activator and includes a metal selected from the group consisting of europium (Eu), manganese (Mn), cerium (Ce), dysprosium (Dy), samarium (Sm), and combinations thereof,

a is 0 to 1, w is above 0 to 4,

b is 0 to 1, x is 0 to 5,

c is 0 to below 1, y is above 0 to 6,

d is 0 to 3,

e is 0.7 to 1

z is above 2 to 54, and

f is 0.001(w+x+y+d) to 0.3(w+x+y+d).

[General Formula 2] (M1₂ₐM2₁₋ₐ)_{w}(M3_{b})ₓAl_{y}(M4SiₑN_{4e/3})_{z}:R_{f},

wherein

M1 includes a monovalent alkali metal selected from the group consisting of lithium (Li), sodium (Na), potassium (K), and combinations thereof,

M2 includes a divalent alkaline earth metal selected from the group consisting of magnesium (Mg), calcium (Ca), strontium (Sr), barium (Ba), zinc (Zn), and combinations thereof,

M3 includes a trivalent metal selected from the group consisting of boron (B), yttrium (Y), gadolinium (Gd), terbium (Tb), cerium (Ce), and combinations thereof,

M4 acts as a host lattice or a co-activator of the phosphor and includes a trivalent, tetravalent, or pentavalent metal selected from the group consisting of phosphorus (P), vanadium (V), titanium (Ti), arsenic (As), a carbon (C), and combinations thereof,

R includes an activator and a metal selected from the group consisting of europium (Eu), manganese (Mn), cerium (Ce), dysprosium (Dy), samarium (Sm), and combinations thereof,

a is 0 to 1, w is above 0 to 4,

b is 0 to 1, x is 0 to 5,

c is 0 to below 1, y is above 0 to 6,

d is 0 to 3,

e is 0.7 to 1

z is above 1 to 27, and

f is 0.001 (w+x+y+d) to 0.3(w+x+y+d).

The general formulas 1 and 2 for the oxynitride and nitride phosphor powders may contain a very small amount of oxygen. The oxygen may be oxygen in a crystal or a coordinative oxygen generated by a covalent bond of nitrogen. Here, the oxygen may significantly affect light emission. In general, a nitride material has defects by covalent bond. Therefore, the nitride material easily reacts with oxygen in the air thereby oxidizing or subjecting coordinate bond. Accordingly, the nitride material may cause a change in light emission.

In an illustrative embodiment, it is possible to provide a phosphor powder selected from the group consisting of CASN, AIN, GaN, TiN, SiN, and combinations thereof through the above-described producing method. More specifically, it is possible to provide a phosphor powder such as M-α-SiAlON:M_{Re}, β-SiAlON : M_{Re}, MSi₂O₂N₂:M_{Re}, EuSi₂O₂N₂, BCNO, and MASN:M_{Re}, M₂Si₅N₈:M_{Re}, MYSi₄N₇:Re, La₃Si₆N₁₁:M_{Re}, YTbSi₄N₆C, Y₂Si₄N₆C:M_{Re} (M=Ca, Sr, Ba; M_{Re}=Eu, Ce, Mn, Tb), and so on.

If necessary, in order to remove single-phase impurities such as AIN generated upon synthesis of oxynitride and nitride phosphor powders through the LPP-CRN method, the oxynitirde and nitride phosphor powders are put into a 1% to 10% aqueous inorganic acid solution to dissolve the AlN into an Al(OH)₃ form to be removed. Through this process, higher purity oxynitride and nitride phosphor powders can be obtained. However, the process is hazardous because the reaction is rapidly proceeded with at a high temperature of 0°C to 100°C, and the inorganic acid may be evaporated at a temperature of more than 100°C. Further, since the reaction is slowly proceeded with at a temperature of less than 0°C, the process is not effective.

If necessary, a grinding step for the phosphor powders produced by the above-described producing method may be additionally carried out. With respect to an equipment used for the grinding step, at least one of a dry type diffuser such as a ball mill, a roller mill, a vacuum ball mill, attritor mill, a planetary ball mill, a sand mill, a cutter mill, a hammer mill, a jet mill, an ultrasonic wave diffuser, and a high pressure homogenizer may be used. The phosphor powders can be further finely grinded through the grinding process.

Hereinafter, working examples of the producing method for oxynitride and nitride phosphors and oxynitride and nitride phosphors produced by the producing method will be described in detail with reference to the drawings. However, the present disclosure is not limited to the examples.

[Example 1]

Synthesis of nitride CaAlSiN₃:Eu²⁺ using a second precursor

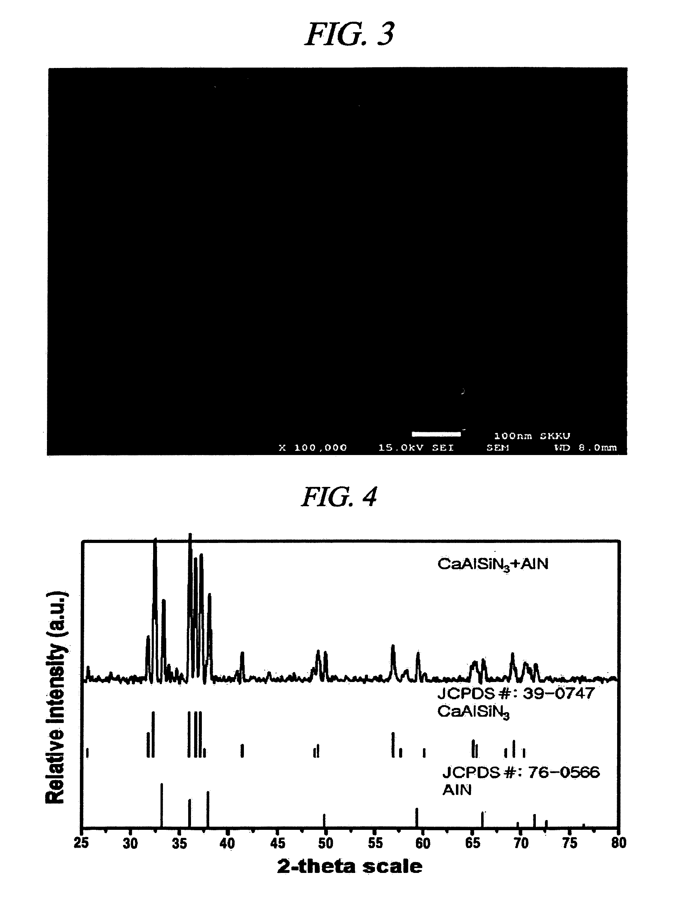

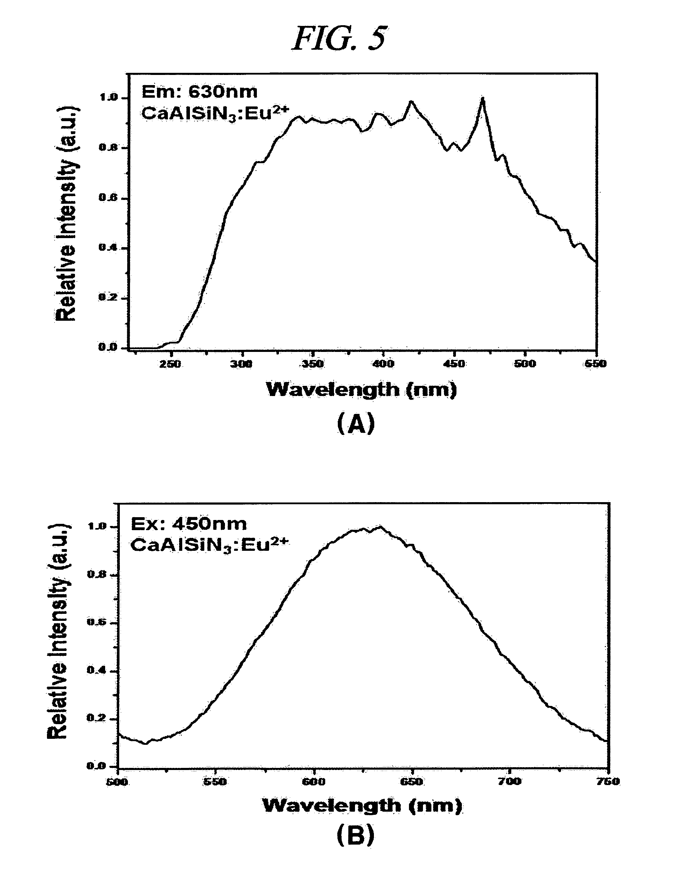

In order to synthesize a 5 g phosphor having a composition of Ca_{0.92}Eu₀.₀₈AlSiN₃, as a metal source solution in a deionized water (D.I water), contained 17.22g of Ca(NO₃)₂ 30 wt% aqueous solution, 25.67g of Al(NO₃)₃·9H₂O 50 wt% aqueous solution, 10.00g of SiO₂(sol) 20 wt% aqueous solution, and 3.16g of EuCl₃·6H₂O 30 wt% aqueous solution. The solution was impregnated in 12.26 g crystalline cellulose powders to obtain a first precursor. The first precursor was calcined in the air at 300°C to obtain a second precursor having a particle size of 20 nm to 30 nm (FIG. 3). The second precursor was cooled to a room temperature and put into a horizontal tubular electric furnace in which nitrogen flows at 1 cm/s, to be calcined at 1,600°C for 5 hours. FIG. 4 shows an XRD pattern of the nitride phosphor CaAlSiN₃:Eu²⁺ obtained in the present example. In the X-ray pattern, a CaAlSiN₃:Eu²⁺ pattern and a pattern of AlN are mixed. FIG. 5 (a, b) show PL (photo luminescence) results as obtained therefrom. FIG. 5(a) shows characteristics of the nitride phosphor of CaAlSiN₃:Eu²⁺ having a large excitation wavelength. FIG. 5(b) shows a light emission wavelength based on 450 nm.

[Example 2]

Sysnthesis of oxynitride Ca-α-SiAlON:EU²⁺ using a first precursor

In a nitriding method using a first precursor, in order to obtain a 5 g phosphor having a composition of Ca_{0.8}Eu_{0.05}Al_{2.4}Si_{9.6}O_{0.7}N_{15.3}, metal salts were dissolved respectively in deionized water (D.I water) to obtain aqueous solutions of 3.65 g of Ca(NO₃)₂ 30 wt%, 15.02 g of Al(NO₃)₃·9H₂O 50 wt%, 23.40 g of SiO₂(sol) 20 wt%, and 0.48 g of EuCl₃·6H₂O 30 wt%. The mixture solution was impregnated in 15.48g cellulose powders. In this case, a use amount of cellulose was determined by using carbons contained in the cellulose powders by a following reaction equation:

Reaction Equation: Ca_{0.8}Eu_{0.05}Al₂.₄Sl_{9.6}O₂₃.₆₇₅+22.975C (amount of required carbons) +7.65N₂ → Ca_{0.8}Eu_{0.05}Al_{2.4}Si_{9.6}O₀.₇N_{15.3} + 22.975CO↑ (g)

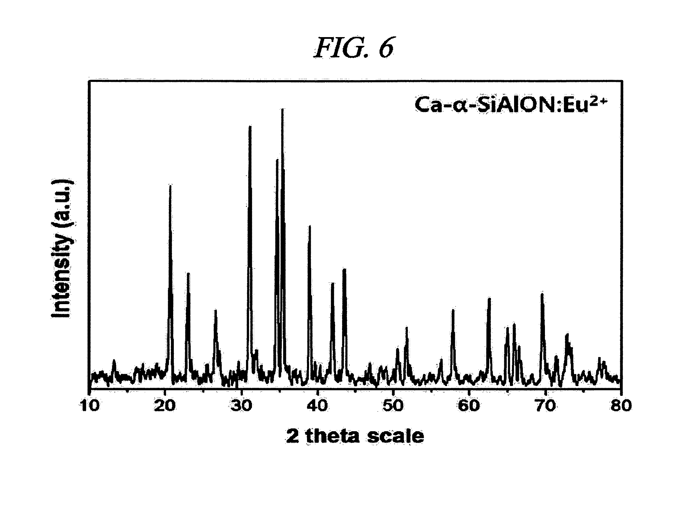

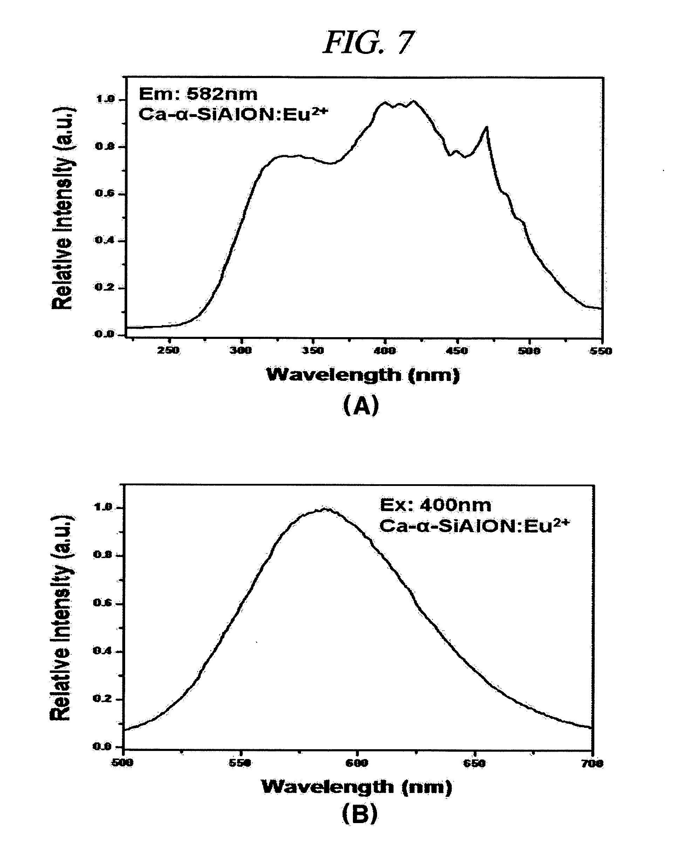

Since the metal nitrate source material was self-oxidized without supplied oxygen, a quantitative adjustment of carbons was easy. The impregnated solution was heated to 1,500°C at a temperature increasing rate of 5°C/min by using a horizontal tubular furnace in which nitrogen flows at 1 cm/s. The heated solution was kept at 1,500°C for 5 hours so that Ca-α-SiAlON:Eu²⁺ was obtained. The synthesized Ca-α-SiAlON:Eu²⁺ was assessed through XRD analysis (FIG. 6) and PL (FIG. 7(a,b)). FIG. 7(a) shows a broad excitation wavelength of Ca-α-SiAlON:Eu²⁺. Ca-α-SiAlON:Eu²⁺ in FIG. 7(b) shows a broad light emission wavelength based on 582nm.

[Example 3]

Synthesis of oxynitride β-SiAlON:Eu²⁺ using a second precursor

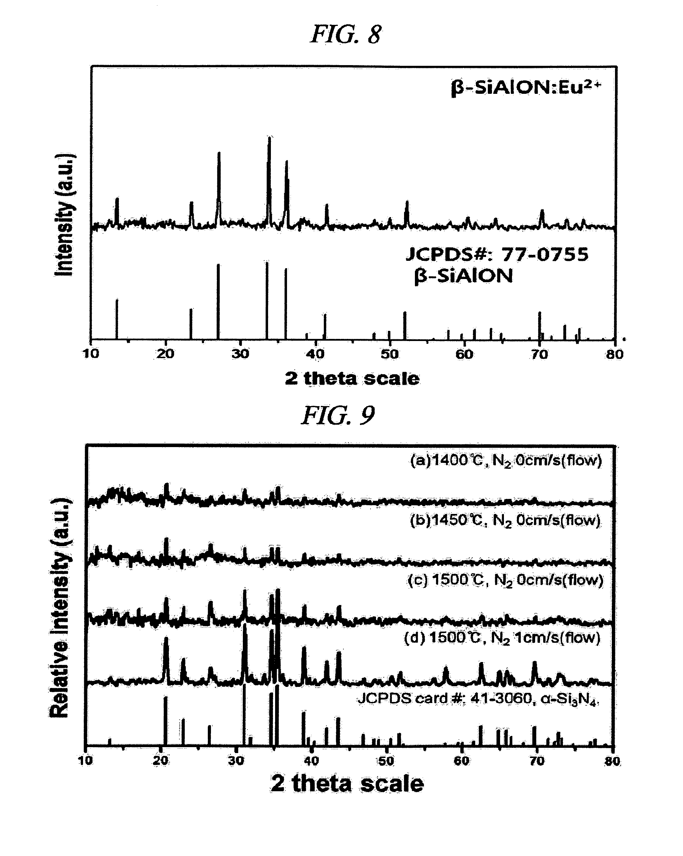

5g Eu_{0.05}Si₅Al_{0.95}O_{1.05}N_{6.95} was synthesized in the same manner as described in Example 2. 12.38 g of Al(NO₃)₃·9H₂O 50 wt%, 25.38 g of SiO₂(sol) 20 wt%, and 1.00 g of EuCl_{3'}6H₂O 30 wt% were used. The mixture solution was impregnated in 14.61 g cellulose powders. In the present example, calcining in the atmosphere of gas containing nitrogen in which the gas flows with a constant initial flow rate was performed in a nitrogen atmosphere with initial flow rate of 1 cm/s at 1600°C for 5 hours. Synthesized β-SiAlON:Eu²⁺ was identified through XRD analysis (FIG. 8).

[Example 4]

Nitriding of SiO₂ by LPP-CRN

In order to obtain 5 g of Si₃N₄ powders through the LPP-CRN method, carbons of a SiO₂ sol and cellulose were calculated, and a 31.25 g of SiO₂ 20 wt% sol and 17.33 g of cellulose powders were impregnated with 60:40 wt%. Thereafter, the impregnation material was calcined by using a box-shaped furnace in a N₂ atmosphere with an initial flow rate of 0cm/s for 5 hours at 1,400°C, 1,450°C, and 1,500°C, respectively. The obtained powders are shown in FIG. 9 through XRD pattern analysis. As shown in FIG. 9(a, b, c), crystallinity of phases of the Si₃N₄ powders becomes better with increase of the temperature from 1,400°C to 1,450°C and to 1,500°C. This is a general nano size effect and shows that reactivity and a reaction rate become outstandingly better. Results of tests with the N₂ initial flow rate of 1 cm/s are shown in FIG. 9(d). The crystallinity in nitriding with a flow rate of 1cm/s is better than the crystallizability in nitriding with a flow rate of 0 cm/s.

[Example 5]

Nitriding Al₂O₃ by a first precursor through LPP-CRN

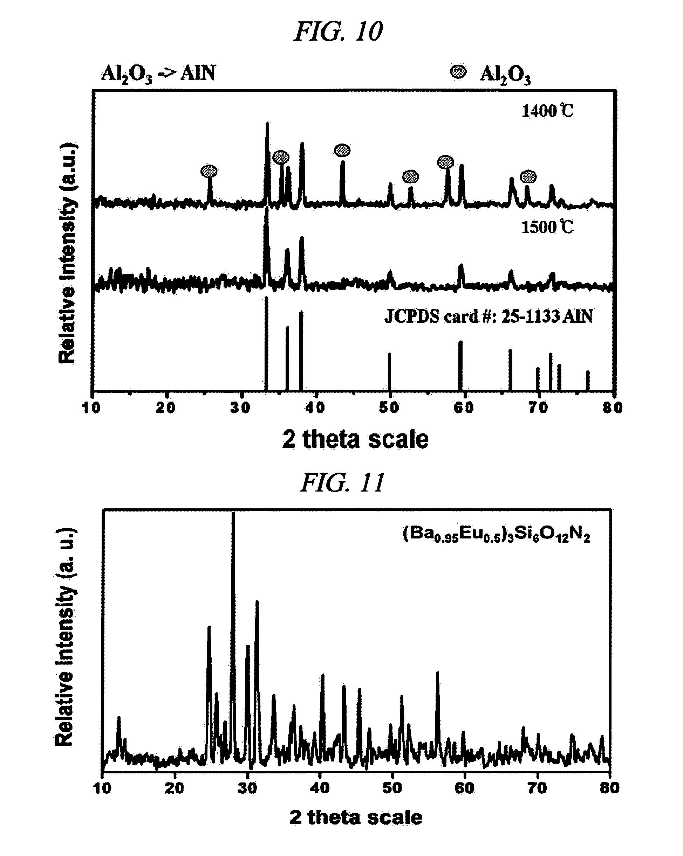

In order to obtain 5 g of AlN powders through the LPP-CRN method, carbons of 14.83 g of cellulose powders were calculated, and a 65.37 g of Al(NO₃)₃·9H₂O 70 wt% solution was impregnated in the 14.83 g cellulose powders with 66:34 wt%. The mixture solution was calcined by using a box-shaped furnace in an N₂ atmosphere with an initial flow rate 0 cm/s for 5 hours at 1,400°C and 1,500°C, respectively. Thereafter, the obtained powders are shown in FIG. 10 through XRD pattern analysis. As shown in FIG. 10, in the AlN powders at 1,400°C, an oxide of Al₂O₃ and a nitride of AlN co-exist. However, a single phase of AlN was formed as the temperature reaches 1,500°C.

[Example 6]

Synthesis of (Ba_{0.95}Eu_{0.05})₃Si₆O₁₂N₂ by a second precursor

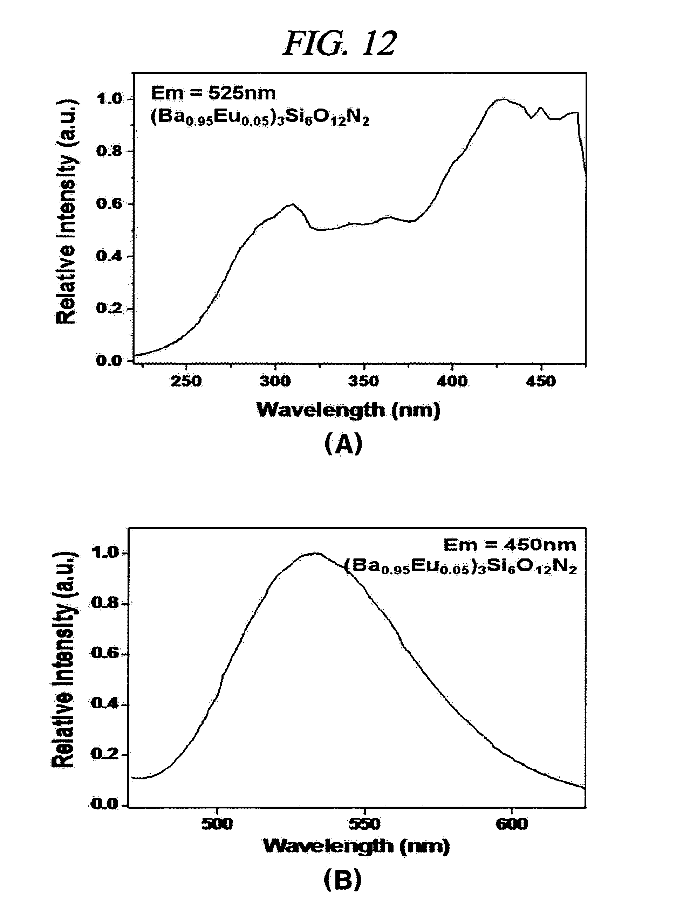

5 g of (Ba_{0.95}Eu_{0.05})₃Si₆O₁₂N₂ was synthesized in the same manner as described in Example 1. Solutions of 24.06 g of Ba(NO₃)₂ 20 wt%, 7.5 g of SiO₂(sol) 40 wt%, and 0.22 g of EuCl₃·6H₂O 50 wt% were stirred at 70°C for 3 hours to obtain a homogeneous solution. The homogeneous solution was impregnated in 15.89 g of cellulose powders and calcined in the air at 450°C for 1 hour. Calcining in the atmosphere of gas containing nitrogen in which the gas flows with a contstant initial flow rate was performed in a nitrogen atmosphere with initial flow rate of 1 cm/s at 1,300°C for 5 hours. In case of the oxynitride phosphor containing a less amount of nitrogen, nitriding by a first precursor is effective. This is because an amount of a polymer compound, which is put as a supply source of carbons is too small to be impregnated when a small amount of nitriding is required. Accordingly, the solution was impregnated in the polymer compound at a ratio of 1:0.5. Thereafter, the impregnation material was calcined at a high temperature (from 250°C to 550°C) as the oxynitride phosphor contained a less amount of nitrogen. The synthesized (Ba_{0.95}Eu_{0.05})₃Si₆O₁₂N₂ was assessed through XRD analysis (FIG. 11) and PL (FIG. 12(a,b)) measurement. FIG. 12(a) shows a large excitation wavelength of (Ba₀.₉₅Eu_{0.05})₃Si₆O₁₂N₂ based on 450nm. FIG. 12 (b) shows a broad light emission wavelength of (Ba_{0.95}Eu_{0.05})₃Si₆O₁₂N₂ based on 525 nm.

[Comparative Example 1]

Nitriding SiO₂ through general CRN

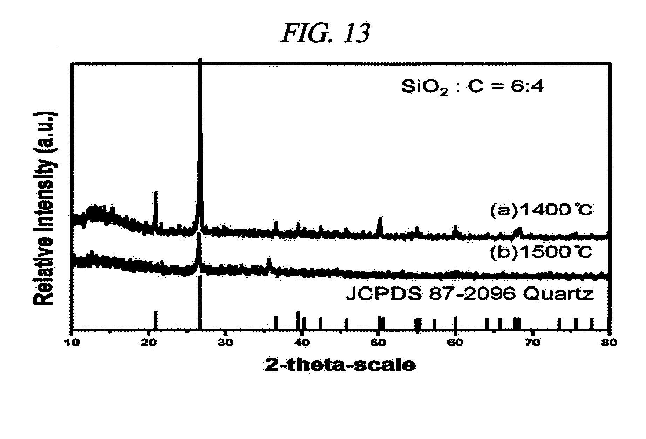

In order to obtain 5 g of Si₃N₄ powders through a general CRN method, 1µm quartz phase SiO₂ powders and 1µm C powders were mixed at 60:40wt% by a ball mill for 24 hours. Thereafter, the mixed powders were calcined by using a box-shaped furnace in a N₂ atmosphere with an initial flow rate of 0 cm/s for 5 hours at 1,400°C and 1,500°C, respectively. Thereafter, the obtained powders are shown in FIG. 13(a, b) through XRD pattern analysis. As shown in FIG. 13, crystallizability of the phases in the quartz phase SiO₂ powders was lowered as the temperature increases to 1, 400°C (FIG. 13 (a)) and to 1,500°C (FIG. 13(b)). In a general carbon thermal decomposition method, the N₂ initial flow rate is 1 cm/s. However, in the present example, since the flow rate is 0 cm/s, nitriding reaction does not occur, and only a carbon thermal decomposition reaction occurs at a temperature of more than 900°C.

The above description of the illustrative embodiments is provided for the purpose of illustration, and it would be understood by those skilled in the art that various changes and modifications may be made without changing technical conception and essential features of the illustrative embodiments.

## Claims

1. A producing method for an oxynitride phosphor powder, comprising
impregnating an aqueous solution, which contains a silicon (Si) source and a metal source to form an oxynitride phosphor, in an organic polymer material to obtain a first precursor, and
calcining the first precursor under a nitrogen-containing atmosphere at 800°C to 1,800°C to obtain an oxynitride phosphor powder.

2. The producing method for an oxynitride phosphor powder claimed in claim 1,
wherein the producing method further comprises pre-calcining the first precursor under an oxygen-containing atmosphere at 150°C to 550°C to obtain a second precursor, prior to calcining the first precursor.

3. The producing method for an oxynitride phosphor powder claimed in claim 2,
wherein the calcining under the nitrogen-containing atmosphere is performed after cooling following the pre-calcining or sequentially after the pre-calcining.

4. The producing method for an oxynitride phosphor powder claimed in claim 1,
wherein the organic polymer material is converted into a carbon material during the calcining process to act as a reducing agent.

5. The producing method for an oxynitride phosphor powder claimed in claim 1,
wherein the silicon (Si) source includes a silica sol or water-soluble silica.

6. The producing method for an oxynitride phosphor powder claimed in claim 5,
wherein a particle size of the silica sol is 5nm to 50 nm.

7. The producing method for an oxynitride phosphor powder claimed in claim 1,
wherein the metal source to form the oxynitride phosphor includes a metal source to form an oxynitride phosphor powder represented by the following general formula 1:
[General Formula 1] (M1₂ₐM2₁₋ₐ)_{w}(M3_{b}M4_{1-b})ₓ(M4_{c}Si_{1-c})_{y}M4_{d}(O₁₋ₑN_{2e/3})_{z}:R_{f},
wherein
M1 includes a monovalent alkali metal selected from the group consisting of lithium (Li), sodium (Na), potassium (K), and combinations thereof,
M2 includes a divalent alkaline earth metal selected from the group consisting of magnesium (Mg), calcium (Ca), strontium (Sr), barium (Ba), zinc (Zn), and combinations thereof,
M3 includes a trivalent metal selected from the group consisting of boron (B), aluminum (Al), yttrium (Y), gadolinium (Gd), terbium (Tb), cerium (Ce), and combinations thereof,
M4 acts as a host lattice or the co-activator of a phosphor and includes a trivalent, tetravalent, or pentavalent metal selected from the group consisting of phosphorus (P), vanadium (V), titanium (Ti), arsenic (As), and combinations thereof,
R is an activator and includes a metal selected from the group consisting of europium (Eu), manganese (Mn), cerium (Ce), dysprosium (Dy), samarium (Sm), and combinations thereof,
a is 0 to 1, w is above 0 to 4,
b is 0 to 1, x is 0 to 5,
c is 0 to below 1, y is above 0 to 6,
d is 0 to 3,
e is 0.7 to 1
z is above 2 to 54, and
f is 0.001(w+x+y+d) to 0.3(w+x+y+d).

8. The producing method for an oxynitride phosphor powder claimed in claim 1,
wherein the producing method further comprises calcining under a nitrogen-containing atmosphere and a pressurization atmosphere of 1 atm to 100 atm at 800°C to 1,900°C.

9. The producing method for an oxynitride phosphor powder claimed in claim 1,
wherein the organic polymer material includes a pulp, a crystallized cellulose powder, a non-crystalline cellulose powder, a rayon powder, a spherical cellulose powder, or a cellulose solution.

10. The producing method for an oxynitride phosphor powder claimed in claim 1,
wherein the nitrogen-containing atmosphere includes N₂, H₂/N₂ mixture gas, or NH₃ gas.

11. The producing method for an oxynitride phosphor powder claimed in claim 10,
wherein the nitrogen-containing atmosphere further includes CO or CH₄ gas.

12. The producing method for an oxynitride phosphor powder claimed in claim 1,
wherein the metal source includes a flux source.

13. The producing method for an oxynitride phosphor powder claimed in claim 12,
wherein the flux source includes NH₂(CO)NH₂(urea), NH₄N0₃, NH₄Cl, NH₂CONH₂, NH₄HCO₃, H₃BO₃, BaCl₂, or EuCl₃.

14. The producing method for an oxynitride phosphor powder claimed in claim 1,
wherein the producing method further comprises subjecting the obtained oxynitride phosphor powder to acid or alkali treatment.

15. An oxynitride phosphor powder represented by the following general formula 1 and produced according to the producing method claimed in any one of claims 1 to 14:
[General Formula 1] (M1₂ₐM2₁₋ₐ)_{w}(M3_{b}M4_{1-b})ₓ(M4_{c}Si_{1-c})_{y}M4_{d}(O₁₋ₑN_{2e/3})_{z}:R_{f},
wherein
M1 includes a monovalent alkali metal selected from the group consisting of lithium (Li), sodium (Na), potassium (K), and combinations thereof,
M2 includes a divalent alkaline earth metal selected from the group consisting of magnesium (Mg), calcium (Ca), strontium (Sr), barium (Ba), zinc (Zn), and combinations thereof,
M3 includes a trivalent metal selected from the group consisting of boron (B), aluminum (Al), yttrium (Y), gadolinium (Gd), terbium (Tb), cerium (Ce), and combinations thereof,
M4 acts as a host lattice or a co-activator of the phosphor and includes a trivalent, tetravalent, or pentavalent metal selected from the group consisting of phosphorus (P), vanadium (V), titanium (Ti), arsenic (As), and combinations thereof,
R is an activator and includes a metal selected from the group consisting of europium (Eu), manganese (Mn), cerium (Ce), dysprosium (Dy), samarium (Sm), and combinations thereof,
a is 0 to 1, w is above 0 to 4,
b is 0 to 1, x is 0 to 5,
c is 0 to below 1, y is above 0 to 6,
d is 0 to 3,
e is 0.7 to 1
z is above 2 to 54, and
f is 0.001(w+x+y+d) to 0.3(w+x+y+d).

16. The oxynitride phosphor powder claimed in claim 15,
wherein a particle diameter of the oxynitride phosphor powder is 15 µn or less.

17. The oxynitride phosphor powder claimed in claim 15,
wherein the oxynitride phosphor powder includes M-α-SiAlON:M_{Re}, β-SiAlON : M_{Re}, MSi₂O₂N₂:M_{Re,} EuSi₂O₂N₂, or BCNO, in which M includes at least one selected from the group consisting of Ca, Sr, and Ba, and M_{Re} includes at least one selected from the group consisting of Eu, Ce, Mn, and Tb.

18. A display comprising the oxynitride phosphor powder claimed in claim 15.

19. The display claimed in claim 18,
wherein the display is a cathode-ray tube, a light emitting diode (LED), a plasma display panel (PDP), a field emission display (FED), or a vacuum fluorescence display (VFD).

20. A lamp comprising the oxynitride phosphor powder claimed in claim 15.

21. A producing method for a nitride phosphor powder, the producing method comprising
impregnating an aqueous solution, which contains a silicon (Si) source and a metal source to form a nitride phosphor, in an organic polymer material to obtain a first precursor, and
calcining the first precursor under a nitrogen-containing atmosphere at 800°C to 1800°C to obtain a nitride phosphor powder.

22. The producing method for a nitride phosphor powder claimed in claim 21,
wherein the producing method further comprises
pre-calcining the first precursor in an oxygen-containing atmosphere at 150°C to 550°C to obtain a second precursor, prior to calcining the first precursor.

23. The producing method for a nitride phosphor powder claimed in claim 22,
wherein calcining under the nitrogen-containing atmosphere is performed after cooling following the pre-calcining or sequentially after the pre-calcining.

24. The producing method for a nitride phosphor powder claimed in claim 21,
wherein the organic polymer material is converted into a carbon material during the calcining process to act as a reducing agent.

25. The producing method for a nitride phosphor powder claimed in claim 21,
wherein the silicon (Si) source includes a silica sol or an water-soluble silica.

26. The producing method for a nitride phosphor powder claimed in claim 25,
wherein a particle size of the silica sol is 5 nm to 50 nm.

27. The producing method for a nitride phosphor powder claimed in claim 21,
wherein the metal source to form a nitride phosphor includes a metal source to form the nitride phosphor powder represented by the following general formula 2:
[General Formula 2] (M1₂ₐM2₁₋ₐ)_{w}(M3_{b})ₓAl_{y}(M4_{c}SiₑN_{4e/3})_{z}:R_{f},
wherein
M1 includes a monovalent alkali metal selected from the group consisting of lithium (Li), sodium (Na), potassium (K), and combinations thereof,
M2 includes a divalent alkaline earth metal selected from the group consisting of magnesium (Mg), calcium (Ca), strontium (Sr), barium (Ba), zinc (Zn), and combinations thereof,
M3 includes a trivalent metal selected from the group consisting of boron (B), yttrium (Y), gadolinium (Gd), terbium (Tb), cerium (Ce), and combinations thereof,
M4 acts as a host lattice or a co-activator of the phosphor and includes a trivalent, tetravalent, or pentavalent metal selected from the group consisting of phosphorus (P), vanadium (V), titanium (Ti), arsenic (As), and combinations thereof,
R is an activator and includes a metal selected from the group consisting of europium (Eu), manganese (Mn), cerium (Ce), dysprosium (Dy), samarium (Sm), and combinations thereof,
a is 0 to 1, w is above 0 to 4,
b is 0 to 1, x is 0 to 5,
c is 0 to below 1, y is above 0 to 6,
d is 0 to 3,
e is 0.7 to 1
z is above 1 to 27, and
f is 0.001(w+x+y+d) to 0.3(w+x+y+d).

28. The producing method for a nitride phosphor powder claimed in claim 21,
wherein the producing method further comprises calcining under a nitrogen-containing atmosphere and a pressurization atmosphere of 1 atm to 100 atm at 800°C to 1,900°C.

29. The producing method for a nitride phosphor powder claimed in claim 21,
wherein the organic polymer material includes a pulp, a crystallized cellulose powder, a non-crystalline cellulose powder, a rayon powder, a spherical cellulose powder or a cellulose solution.

30. The producing method for a nitride phosphor powder claimed in claim 21,
wherein the nitrogen-containing atmosphere includes N₂, H₂/N₂ mixture gas, or NH₃ gas.

31. The producing method for a nitride phosphor powder claimed in claim 21,
wherein the nitrogen-containing atmosphere further includes CO or CH₄ gas.

32. The producing method for a nitride phosphor powder claimed in claim 21,
wherein the metal source includes a flux source.

33. The producing method for a nitride phosphor powder claimed in claim 32,
wherein the flux source includes NH₂(CO)NH₂(urea), NH₄NO₃, NH₄Cl, NH₂CONH₂, NH₄HCO₃, H₃BO₃, BaCl₂, or EuC1₃.

34. The producing method for a nitride phosphor powder claimed in claim 21,
wherein the producing method further comprises subjecting the obtained nitride phosphor powder to acid or alkali treatment.

35. A nitride phosphor powder represented by the following general formula 2 and produced according to the producing method claimed in any one of claims 21 to 34:
[General Formula 2] (Ml₂ₐM2₁-ₐ)_{w}(M3_{b})ₓAl_{y}(M4_{c}SiₑN_{4e/3})_{z}=R_{f},
wherein
M1 includes a monovalent alkali metal selected from the group consisting of lithium (Li), sodium (Na), potassium (K), and combinations thereof,
M2 includes a divalent alkaline earth metal selected from the group consisting of magnesium (Mg), calcium (Ca), strontium (Sr), barium (Ba), zinc (Zn), and combinations thereof,
M3 includes a trivalent metal selected from the group consisting of boron (B), yttrium (Y), gadolinium (Gd), terbium (Tb), cerium (Ce), and combinations thereof,
M4 acts as a host lattice or a co-activator of the phosphor and includes a trivalent, tetravalent, or pentavalent metal selected from the group consisting of phosphorus (P), vanadium (V), titanium (Ti), arsenic (As), and combinations thereof,
R is an activator and includes a metal selected from the group consisting of europium (Eu), manganese (Mn), cerium (Ce), dysprosium (Dy), samarium (Sm), and combinations thereof,
a is 0 to 1, w is above 0 to 4,
b is 0 to 1, x is 0 to 5,
c is 0 to below 1, y is above 0 to 6,
d is 0 to 3,
e is 0.7 to 1
z is above 1 to 27, and
f is 0.001(w+x+y+d) to 0.3(w+x+y+d).

36. The nitride phosphor powder claimed in claim 35,
wherein a particle diameter of the nitride phosphor powder is 15 µm or less.

37. The nitride phosphor powder claimed in claim 35,
wherein the nitride phosphor powder includes MAlSN:M_{Re}, M₂Si₅N8:M_{Re}, MYSi₄N7:M_{Re}, La₃Si₆N₁₁:M_{Re}, YTbSi₄N₆C, or Y₂Si₄N₆C:M_{Re}, in which M includes at least one selected from the group consisting of Ca, Sr, and Ba, and M_{Re} includes at least one selected from the group consisting of Eu, Ce, Mn, and Tb.

38. A display comprising the nitride phosphor powder claimed in claim 35.

39. The display claimed in claim 38,
wherein the display is a cathode-ray tube, a light emitting diode (LED), a plasma display panel (PDP), a field emission display (FED), or a vacuum fluorescence display (VFD).

40. A lamp comprising the nitride phosphor powder claimed in claim 35.
